# EUROPEAN PATENT SPECIFICATION

(11) **EP 3 101 396 B1**
(45) Date of publication and mention of the grant of the patent: **15.08.2018**
(21) Application number: 16172598.1
(22) Date of filing: 02.06.2016
(51) Int. Cl.: G01F 23/26, G01F 23/00, F25D 21/14, F25D 29/00, A47F 3/04

(54) **REFRIGERATED DISPLAY CASE WITH A SENSOR TO DETECT A CLOGGED DRAIN**
VERKAUFSKÜHLMÖBEL MIT EINEM SENSOR ZUR DETEKTION EINES VERSTOPFTEN ABLAUFS
PRÉSENTOIR FRIGORIFIQUE AVEC UN CAPTEUR DE DÉTECTION DE DRAIN ENCOMBRÉ

(30) Priority: 02.06.2015 US 201562169754 P
(43) Date of publication of application: 07.12.2016
(73) Proprietor: Parker-Hannifin Corporation, Cleveland, Ohio 44124-4141 (US)
(72) Inventor: KUNAPULI, Raghujit, Saint Charles, MO 63303 (US); PARKER, Christian Dean, New Haven, MO 63068 (US); PLASSMEYER, Timothy A, Union, MO 63084 (US); WITTER, Max Allan, Washington, MO 63090 (US)
(74) Representative: Atkinson, Ian Anthony

(56) References cited:
- EP-A2- 2 618 082
- US-A- 4 165 641
- US-A- 4 418 570
- US-A- 5 729 990
- US-A- 5 965 814
- US-A1- 2008 143 345
- US-A1- 2011 058 961
- US-A1- 2011 259 953

## Description

The present invention generally relates to a refrigerated display case which has a drain and a system for detecting a substance in the drain, and more particularly a sensor that detects a clogged drain using inductive frequency characterization.

Refrigerated display cases include a control system to maintain the temperature of a space relative to a set point by activating a refrigeration unit to cool the space. The refrigeration unit supplies sub-cooled refrigerant to an evaporator coil, which cools warm air from the space that is circulated across the evaporator coil.

When the warm air contacts the colder surface of the evaporator coil (e.g., in air conditioning systems) or when in a defrost mode (e.g., in refrigeration systems), water can accumulate on the evaporator. The water condensation runs down the sides of the evaporator coil and collects in a display case tub. The display case tub has a drain fitting and drain line attached thereto, which allows the water to drain from the display case tub.

Blockage in the drain line can occur due to food or liquid spills into the display case, as well as due to algae, fungus and/or bacterial growth, all of which may form particles that create restrictions in the drain line. Such restriction can cause water to back up into the display case tub. When the display case tub is full of water, the water will overflow out of the tub and into the surrounding area, potentially creating a safety hazard and/or water damage to the surrounding area. The water in the display case tub may also freeze and traditional level sensing devices fail to accurately operate in these scenarios. These limitations in display case tub drain designs can also result in problems and/or damage to the refrigeration system. US-A-5729990 discloses a temperature dependent resistor as a liquid sensor which detects the presence of liquid at a level above a cooling chamber drip tray provided with a drain channel. The temperature dependent resistor is mounted external to the liquid sensor because it must be in direct contact with liquid. Electric power is provided to heat the resistor. The relative temperature change before and after the resistor is heated provides a clear indication as to whether the liquid sensor is surrounded by water or ice or by air.

US-A-2008/143345 discloses a monitoring device which is deployed in the urea tank of a selective catalytic reduction system of a vehicle. The monitoring device includes a radio frequency signal generator and a resonant circuit having an inductor and a capacitor. The output signal from the inductor and capacitor is dependent on the level of the urea solution in the tank.

US-A-2011/058931 discloses a pump system which includes a sensor for the level of a lubricating oil for the pump. Plates in a housing for the oil form a capacitor when the housing contains oil. The plate arrangement provides a signal indicative of the level of oil in the housing.

US-A-2011/259953 discloses a system for monitoring the level of a liquid food product in a food dispenser. A sensor circuit includes a coil, a resistor and a capacitor. The impedance of the sensor circuit depends on the level of liquid in a container for the product.

A combined fluid level sensor and/or drain cover (hereinafter referred to as a drain sensor), which may be for detecting a clog within or around a drain, may utilize a sensor (e.g., a solid state sensor, an inductive sensor, a sensor having a non-contact sensing element, or the like) having an inductance that varies based on the presence of substances in the area of the drain, and a support member to which the sensor is mounted. The support member may form a protective shroud around a sensing portion so as to protect it from contact with debris/substances that may fall into the display case tub.

The invention therefore provides a refrigerated display case which has a drain and a system for detecting a substance in the drain, as defined in claim 1.

A drain sensor which is a used in the display case includes a support member having a cage configuration. The sensor is attached to the support member and arranged within the cage, and the entire assembly is placed in, over or around the drain that is to be monitored. The cage prevents large substances, such as food particles, labels, wire ties and the like that may be unintentionally deposited in a refrigerated display case, from contacting the sensor and providing false readings. By monitoring changes in inductance of the sensor, a fluid, moisture or substance level around the drain is determined. For example, as fluid level rises the inductance of the sensor also rises, and this increase (or decrease) can be measured and correlated to the level of the substance. If the detected level rises above a prescribed level, an alarm can be generated to notify the appropriate personnel.

The sensing element may include an inductor forming an impedance transformer of the surrounding fluid, moisture or substance. The measurement circuitry may be configured to supply an oscillating current to the inductor and to calculate an inductance of the impedance transformer based on a resonant frequency of the impedance transformer.

The measurement circuitry may be configured to determine the level based on a predefined mapping between a plurality of different inductances and a plurality of different levels of a fluid, moisture or substance corresponding to the different inductances.

The cage may include an open end. The cage may include a closed end.

The drain sensor may include a base member, which may be removably attached to the open end of the cage.

The closed end may be formed by a metallic disk member, which may be attached to a first end of the cage. The open end may be formed by an annular member, which may be attached to a second end of the cage opposite the first end.

The sensing element may be fixedly attached to the disk member and may extend toward the open end.

The cage may comprise a screen which may have a bar or cross-hatch configuration.

The support member may comprise a plurality of fastener receivers, which may be for fixing the support member to a support surface.

The drain sensor may include at least one of a wired communication device or wireless communication device, which may be communicatively coupled to the sensing element and may be operative to communicate measurements made by the sensing element to a device, which may be remote from the drain sensor.

An inductance of the sensing element may correspond to a level of fluid, moisture or solid substance present in the cage.

The inductance measurement may increase as fluid, moisture or substance level increases.

The support member may be configured to be inserted into the drain, or immediately over the drain.

The sensing element may comprise a two-dimensional coil.

The sensing element may comprise a three-dimensional coil.

The controller may be configured to at least one of: generate an alarm when the measured fluid level exceeds a prescribed level, or provide an indication of the presence of fluid; or provide an indication of a rate of fluid rise in the drain.

The controller may be configured to determine the substance level based on a mapping between inductance and substance level.

The mapping may be configured such that increasing inductance corresponds to increasing fluid, moisture or substance level.

The invention also provides a method for determining a fluid, moisture or solid substance level in a drain in a refrigerated display case, as defined in claim 11.

The method may include determining the fluid level when a temperature in the area being monitored is less than 0°C (32°F).

Embodiments of this invention will now be described in further detail with reference to the accompanying drawings.
FIG. 1 is a schematic system diagram of a refrigerated display case which includes a drain sensor.
Fig. 2 is a schematic diagram of a system which includes a controller and a drain sensor.
Fig. 3A is a schematic diagram of a simple conventional transformer.
Fig. 3B illustrates a sensor.
Fig. 4A illustrates a sensor package.
Fig. 4B illustrates another sensor package.
Fig. 5A is a bottom perspective view of a drain sensor.
Fig. 5B is a top perspective view of the drain sensor of Fig. 5A.
Fig. 6A is a top perspective view of another drain sensor.
Fig. 6B is a bottom perspective view of the drain sensor of Fig. 6A.
Fig. 6C is an exploded view of the support portion of the drain sensor of Figs. 6A and 6B.
Fig. 7 is a basic flow chart showing steps for monitoring a status of a drain.

The invention is applicable to both medium temperature (generally above 0°C (32°F)) and low-temperature (generally below 0°C (32°F)) refrigerated display cases.

A drain sensor for detecting drain clogs and corresponding system in accordance with the present invention determine when a level of a substance (e.g., water, ice, etc.) within a drain exceeds a prescribed level. In the context of a refrigerated display case, the term "substance" includes fluids (e.g., juices, milk, coffee, water, food juice, etc.) and solids (e.g., fluids in a frozen state such as ice, as well as other solids including dust, dirt, labels, paper packaging, etc.). In the context of the present invention, the term "substance" does not include solid metallic objects.

Various actions may be taken upon detecting an increase in the level of a substance within or around the drain. For example, an alarm may be generated to inform the appropriate personnel of a possible clogged drain if the level of the substance relative to the drain exceeds a prescribed level. Additionally or alternatively, an output may be provided showing the actual level and/or a rate of increase in the level of the substance.

A drain sensor is provided having a body with a first annular end, and a second disk-shape end. The drain sensor further includes a sensor disposed on the second end and extending toward the first end. The sensor is configured to provide an inductance that changes in response to contact with or presence of a substance, such as water, ice or like substance. Preferably, the sensor is arranged to detect a level of the substance relative to the opening in the first end.

The drain sensor is preferably configured to detect a liquid level indicative of a clogged drain line when the sensor provides an output indicative of contact (or near contact) with fluid. The sensor may be employed in a circuit including the sensor, the circuit configured to detect when the sensor provides an output indicative of fluid contact. The drain sensor is employed with a controller, where the controller is in communication with the output of the circuit and/or sensor, and is configured to communicate a signal indicative of preferably a clogged drain line based on the output of the sensor, as explained below. The controller may include a mapping, such as a look-up table or the like, stored in memory, the mapping including a plurality of different inductances of the sensor along with a corresponding fluid, moisture or substance level for each inductance of the sensor. Based on a measured inductance of the sensor, the controller can retrieve the corresponding fluid, moisture or substance level from memory.

Optionally, the drain sensor includes a primary circuit formed by an inductor having a fixed inductance in parallel with a capacitor having a known capacitance. An oscillator supplies an oscillating AC current to the primary circuit and generates a magnetic field in the surrounding material that produces eddy currents in the surrounding material. By doing so, the impedance in the surrounding material is transformed to the primary circuit, and this impedance can be measured to determine the presence of fluid, moisture and/or a substance, e.g., by mapping different measured inductances to different fluid levels, moisture levels, etc.

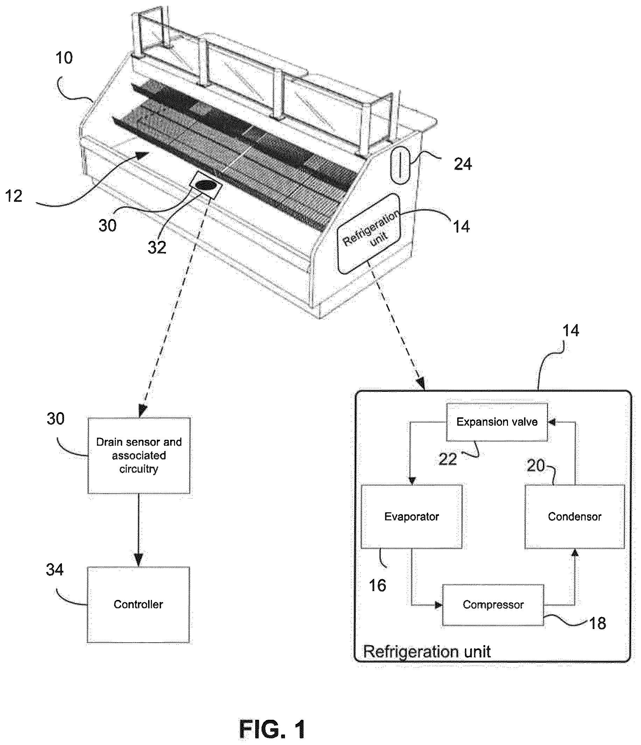

Referring to Fig. 1, a refrigerated display case 10 for conditioning a space 12 is shown. As is well known, refrigerated display cases provide a refrigerated environment in which food products may be displayed without being exposed to warm temperatures. The refrigerated display case 10 includes a refrigeration unit 14 having an evaporator coil 16, a compressor 18, condenser coil 20 and an expansion valve 22 for providing cooling operation. While the refrigeration unit is shown as being part of the display case, portions of the refrigeration unit may be located remote from the display case. The refrigerated display case 10 may be controllably operated by a device 24 (e.g., a thermostat, controller or the like) operatively coupled to the space 12 and the refrigeration unit 14. For medium temperature applications (e.g., above 0°C (32°F)), warm air from the space 12 is circulated across the evaporator coil 16, in which a two-phase refrigerant removes heat from the air. When the warm air contacts the colder surface of the evaporator coil 16, condensation of water can occur. The water condensation is collected and drained through a drain 32, where a drain sensor 30 including a sensor and associated circuitry for measuring an inductance is arranged relative to the drain 32 to detect a clog in the drain 32. For low temperature applications (e.g., where temperatures are below 0°C (32°F)), liquid (water, food juices, spilled substances, cleaning agents, etc.) may collect during a defrost cycle and/or during a wash down cycle, and this liquid is also collected and routed to the drain 32.

The drain sensor 30 may enable detection of a clog in a drain line. A controller 34, which may be located within the refrigerated display case 10 or remote from it, is operatively coupled to the drain sensor 30 to receive data indicative of a level of a fluid, moisture or substance relative to the drain 32, as explained below.

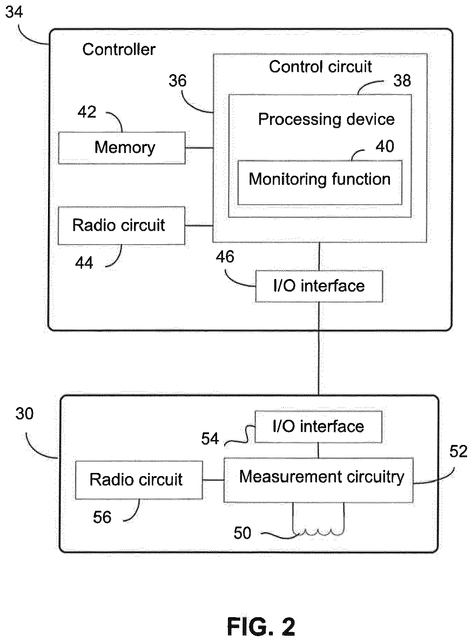

Fig. 2 shows a exemplary controller 34 and drain sensor 30. While the controller 34 and drain sensor 30 are shown as separate devices, part or all of the controller 34 may be integrated with the drain sensor 30 to form a single integrated unit.

The controller 34 includes a control circuit 36 that is responsible for overall operation of the controller 34. For this purpose, the control circuit 36 includes a processing device 38 (e.g., a processor) that executes various applications, such as a monitoring function 40 for monitoring a status of the drain 32 as described in greater detail below. The monitoring function 40 may be implemented in the form of logical instructions that are executed by the processing device 38.

The processing device 38 of the control circuit 36 may be a central processing unit (CPU), microcontroller, microprocessor, or the like. The processing device 38 executes code stored in a memory (not shown) within the control circuit 36 and/or in a separate memory, such as a memory 42, in order to carry out operation of the controller 34. The memory 42 may be, for example, one or more of a buffer, a flash memory, a hard drive, a removable media, a volatile memory, a non-volatile memory, a random access memory (RAM), or other suitable device. In a typical arrangement, the memory 42 includes a non-volatile memory for long term data storage and a volatile memory that functions as system memory for the control circuit 36. The memory 42 may exchange data with the control circuit 36 over a data bus. Accompanying control lines and an address bus between the memory 42 and the control circuit 36 also may be present. The memory 42 is considered a non-transitory computer readable medium.

The controller 34 may include communications circuitry that enables the controller 34 to establish various wireless communication connections. In the exemplary embodiment, the communications circuitry includes a radio circuit 44. The radio circuit 44 includes one or more radio frequency transceivers and an antenna assembly (or assemblies). The controller 34 may be capable of communicating using more than one standard (e.g., WiFi or Bluetooth interface). Therefore, the radio circuit 44 represents each radio transceiver and antenna needed for the various supported connection types. The controller 34 is configured to engage in wireless communications using the radio circuit 44, such as data transfers and the like.

The controller 34 may further include one or more input/output (I/O) interface(s) 46. The I/O interface(s) 46 may be in the form of typical electronic device I/O interfaces and may include one or more electrical connectors for operatively connecting the controller 34 to another device (e.g., the drain sensor 30). The I/O interface may include analog and digital inputs/outputs, communications interfaces (e.g., USB) and the like.

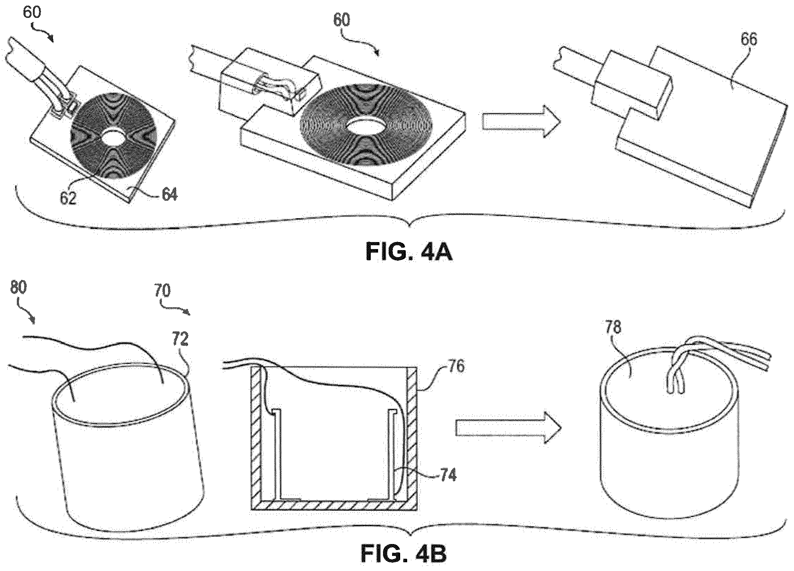

With continued reference to Fig. 2, the drain sensor 30 may include a coil 50 or other inductive sensing device operatively coupled to measurement circuitry 52. The coil 50 may be packaged as a two-dimensional package or as a three-dimensional package as described in further detail below with reference to Figs. 4A and 4B. The measurement circuitry 52 is configured to measure the inductance of the coil 50. Such measurement may be represented, for example, as digital value or as an analog voltage or current signal that is proportional to the change in measured inductance. Operation of the measurement circuitry 52 is described below.

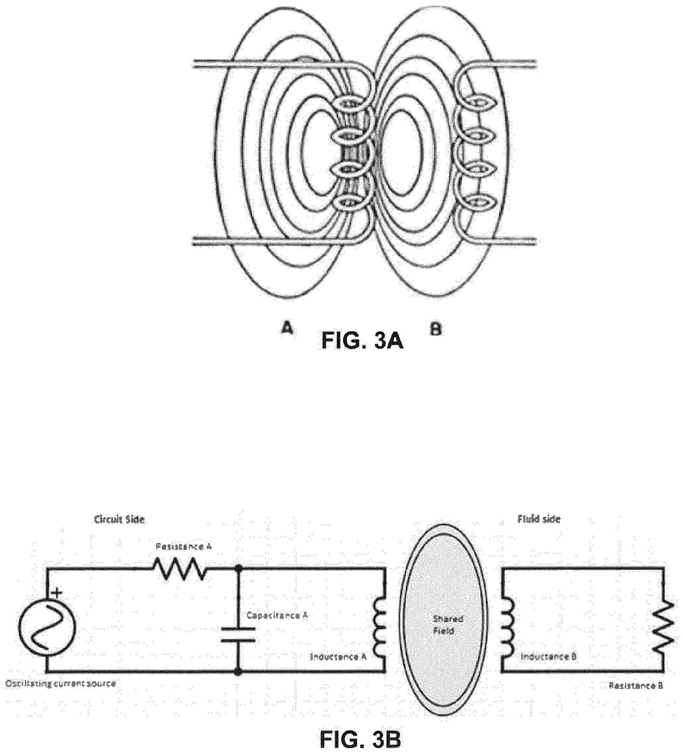

A classical transformer refers to a two coil system where two coils share a field. Current in the first coil stores energy in the magnetic field, and that energy is "transformed" via the field into the second coil in the form of current. Fig. 3A illustrates such configuration, where "A" is the primary coil and "B" is the secondary coil.

The physical arrangement of the sensor is different from the configuration in Fig. 3A. Fig. 3B shows a sensor which has a physical primary coil having a fixed inductance (inductance A), while the secondary coil is formed by the fluid, substance, or moisture. The field emitted by the primary coil causes circular currents to form in the fluid, moisture or substance. These current then generate their own inductive load (inductance B). Also present in both coils is resistance (resistance A and resistance B, respectively). The primary side circuit (i.e., the portion of the circuit to the left of the shared field) also has a capacitance that is fixed and independent of fluid, moisture or substance level. The more fluid, moisture or substance, the more shared field and thus the more induced inductance.

The total Impedance (expressed by the letter Z) experienced by the current is: $Z = \left[T o t a l r e s i s t a n c e o f b o t h c o i l\right] + \left[O s c f r e q u e n c y ∗ T o t a l i n d u c t a n c e\right] - \left[\frac{1}{O s c f r e q u e n c y ∗ C a p A}\right]$

Both the capacitance and the inductance of the primary and secondary circuits depend on the oscillation frequency. There exists a single frequency value (the resonant frequency) for which the capacitive load and inductive impedance terms cancel each other out. When this occurs, the power losses on the current arrive at a local minimum.

The measurement circuitry 52 changes its frequency of oscillation until it finds the resonant frequency. When this occurs, the net impedance can be calculated. This transformed impedance is characteristic of the level of the fluid, moisture or substance. Higher levels engage more magnetic field allowing for more load sharing.

Like the controller 34, the drain sensor 30 may include one or more input/output (I/O) interface(s) 54 and a radio circuit 56. The I/O interface 54 and radio circuit 56 are similar to the I/O interface 46 and radio circuit 44 of the controller 34. Thus, and for sake of brevity, the description of these devices will not be repeated here.

The I/O interface 54 and/or radio circuit 56 enable the controller 34 to be communicatively coupled to the measurement circuitry 52 and/or coil 50 to receive data corresponding to an inductance measurement of the coil 50. Based on the inductance measurement of the coil 50, the controller 34 is configured to determine the presence of a substance in the drain and/or a level of the substance.

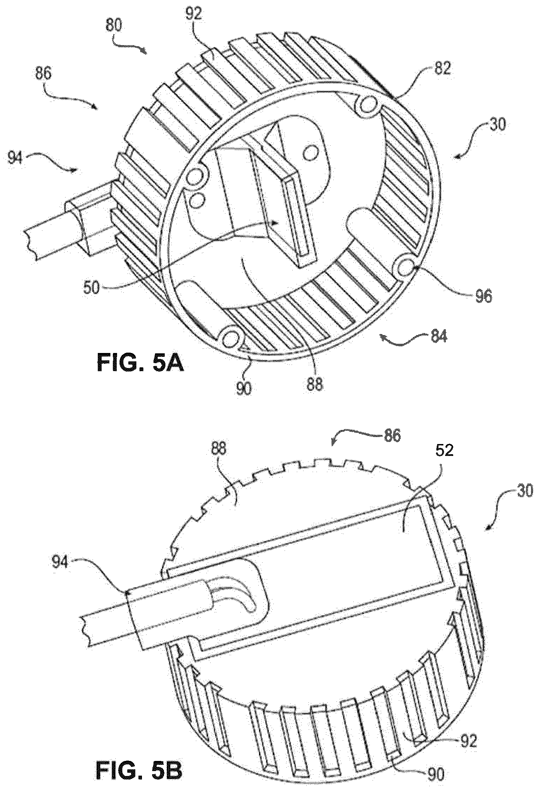

Figs. 4A and 4B show coil packages that may be used in the drain sensor 30. Fig. 4A illustrates a two-dimensional package 60, where conductive traces 62 are formed on a printed circuit board 64, the traces, for example, having a spiral configuration. Other configurations may be employed for the traces depending on the requirements of the specific application. Wires electrically connect the traces 62 to the measurement circuitry 52, thus enabling measurement of inductance. The spiral traces 62 and printed circuit board 64 may be placed within a protective housing 66, which may be formed from a plastic or like material. The housing 66 is attached to a support member of the drain sensor 30 as described below with reference to Figs. 5A and 5B.

Fig. 4B illustrates use of a three-dimensional coil package 70, where a conductive wire is coiled 72 one loop above the other to form a wire stack 74. The stack 74 then is placed in a protective housing 76 (e.g., a plastic housing), such as a cylindrical housing, and a potting compound 78 or the like is placed within the housing so as to seal and protect the wire stack 74. Wires 80 electrically connect the stack 74 to the measurement circuitry 52.

Figs. 5A and 5B are bottom and top perspective views of a drain sensor 30. While the drain sensor 30 is shown having a cylindrical shape, other shapes may be employed depending on the specific application for the drain sensor. For example, a rectangular shape may be employed when the drain 32 is formed as a narrow channel.

The drain sensor 30 includes a support member 80 for placement relative to the drain 32. In one embodiment, the support member 80 is configured to be inserted into the drain 32, and in another embodiment the support member 80 is configured to be placed immediately over the drain 32 and/or near the drain 32.

The support member 80 defines a cage portion 82 (e.g., a screen with a bar or cross-hatch configuration) preferably having an open end 84 and a closed end 86. The closed end 86 may be formed, for example, by a disk member 88 attached to one end of the cage portion 82 (e.g., a first end), and the open end 84 may be formed by an annular member 90 attached to the opposite end (e.g., a second end) of the cage portion. The annular member 90 and the disk member 88 may be connected to one another via a plurality of supports 92.

Figs. 5A and 5B show the supports 92 having a bar-like configuration. A plurality of elongated members arranged generally parallel to one another attach the disk member 88 to the annular member 90. A spacing between adjacent elongated members is preferably selected to prevent substances having dimensions over a prescribed size from passing between adjacent supports 92.

While a bar configuration is illustrated, other configurations are possible. For example, additional supports (not shown) may be arranged perpendicular to the supports 92 and circumferentially around the cage portion 82. In another example the supports 92 may be arranged to form a cross-hatch configuration.

In one example the cage portion 82 forms a cylindrical housing that houses and protects the coil 50. The measurement circuitry 52 and radio circuitry 56 may be arranged within the cage portion 82 or external to the cage portion (e.g., on a top surface of the support member 80 - see Fig. 5B). Preferably, the measurement circuitry 52 is arranged within the cage portion 82 to provide protection from falling substances/spills/leaks that are typically encountered in a refrigerated display case. A wire harness 94, which may be located perpendicular to the coil 50, provides signals to and from the controller 34 (e.g., supply voltage to the coil and signal voltage from the coil). Alternatively or additionally, power may be provided to the coil via a power storage device, e.g., a battery or the like).

The support member 80 may include one or more receiving means 96, such as through holes or the like, for receiving respective fasteners (e.g., a threaded fastener - not shown). The receiving means 96 in conjunction with the fasteners enable the support member 80 to be fixedly attached to a support surface of the refrigerated display case 10. For example, in one example the drain sensor 30 can be connected to a drain cap of a display case. As the fluid (water or other) level rises in the display case, fluid, moisture and/or substances enter through the exterior openings of the cage portion 82 and, if the drain is clogged, submerges at least part of the coil 50.

As noted above, the sensing portion of the drain sensor 30 includes a sensor (coil 50). The coil 50 is attached to the support member 80 and arranged within the cage portion 82. For example, the coil may be fixedly attached to the disk member 88 and extend toward the open end 84. As the level of a fluid, moisture or substance rises, a larger area around the coil 50 is exposed to the fluid/moisture/substance, thereby affecting the inductance of the coil 50. Thus, the inductance of the coil 50 varies in the presence of fluid, moisture or substance and by measuring the inductance of the coil a level of the fluid, substance and/or amount of moisture in or near the cage portion 82 can be deduced.

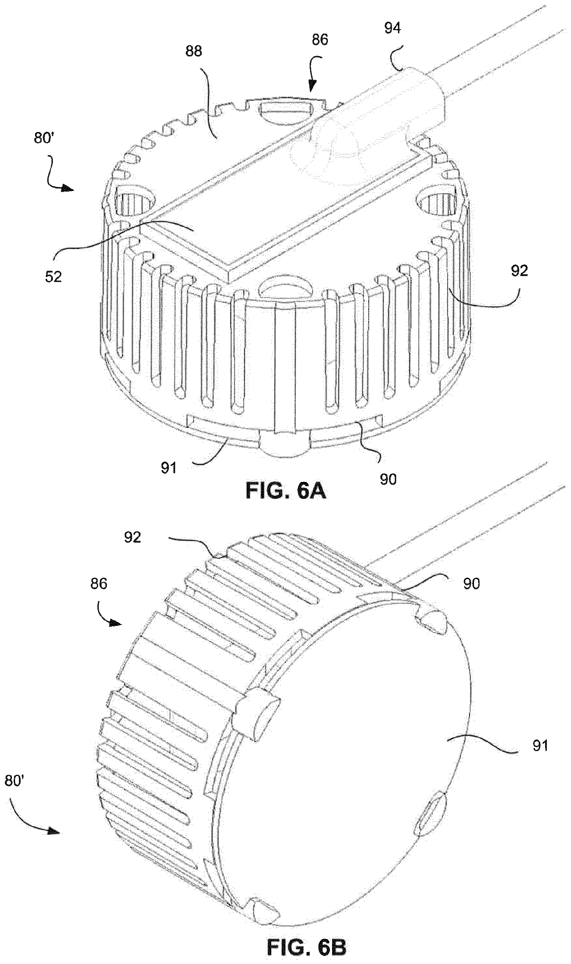

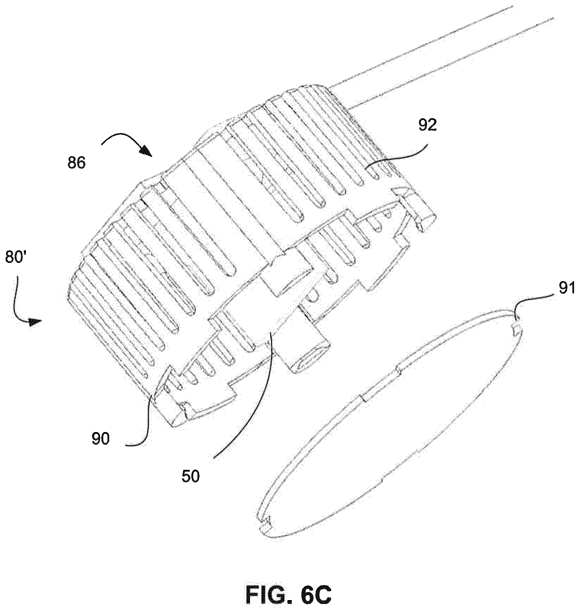

Figs. 6A to 6C show another support member 80' is similar to the support member 80 of Figs. 5A and 5B and therefore only differences are discussed here. The support member 80', unlike the support member 80 of Figs. 5A and 5B, does not have an open end but instead has a base plate 91 removably attached to the annular member 90. The base plate 91 can be freely moved to any desired location relative to the drain 32. This may be advantageous, for example, to prevent false triggers during a wash-down cycle where significant fluid collects at the drain 32, even when the drain is not clogged.

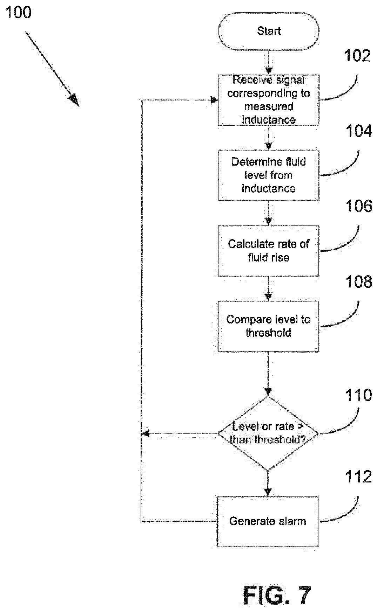

Fig. 7 shows logical operations 100 to implement a method of monitoring a drain using the drain sensor 30 in accordance with the present invention. The exemplary method may be carried out by executing an embodiment of the monitoring function 40, for example. Thus, the flow chart of Fig. 7 may be thought of as depicting steps of a method carried out by the controller 34 and/or drain sensor 30. Although Fig. 7 shows a specific order of executing functional logic blocks, the order of executing the blocks may be changed relative to the order shown. Also, two or more blocks shown in succession may be executed concurrently or with partial concurrence. Certain blocks also may be omitted. In addition, any number of functions, logical operations, commands, state variables, semaphores or messages may be added to the logical flow for purposes of enhanced utility, accounting, performance, measurement, troubleshooting, and the like.

The logical flow for the monitoring function 40 may begin at step 102 where the measurement circuitry 52 obtains a measurement of the inductance of coil 50. As noted above, the inductance of coil 50 is affected by the presence of a liquid, such as water, or a solid, e.g., ice, food particles, etc. The measured inductance of coil 50 then is communicated to the controller 34 for further processing. Such communication may be by way of a wireless communication channel using the radio circuits 44 and 56, or by way of a wired connection using the I/O interfaces 46 and 54 (e.g., a USB or other serial connection).

Next at step 104 the fluid level is calculated. Such calculation is based on the measured inductance of the coil 50. For example, testing has shown that a test (sample) coil has an inductance of about 19.5 µH when in free space (i.e., no liquid in the immediate vicinity of the coil 50), about 20.9 µH when about fifty percent of the coil is immersed in water, and about 21.714 µH when the coil 50 is about seventy-five percent immersed in water. Accordingly, the relationship between inductance of the coil and fluid level is linear and, therefore, the fluid level can be calculated based on the measured inductance of the coil 50 and the known linear relationship.

It is also noted that in the presence of moisture/liquid the inductance of the coil 50 increases. This is in contrast to the behaviour of the coil 50 when in the presence of metal objects, where the inductance of the coil 50 decreases.

At step 106, the rate of fluid rise may optionally be calculated. For example, the change in inductance of the coil 50 over time can be used to calculate the rate at which the liquid level is rising or falling. Such information, for example, may be helpful in determining the severity of the drain clog and/or the success of a defrost cycle.

Moving to step 108, the measured level and/or rate may be compared to prescribed threshold levels to determine if further action is required. The threshold levels, for example, may be user programmable to allow system customization. If at step 110 the measured/calculated level or rate do not exceed respective prescribed threshold levels, the method moves back to step 102 and repeats. However, if measured/calculated level or rate do exceed the respective prescribed thresholds, the method moves to step 112 where an alarm is generated (e.g., an audible and/or visual alarm such as an LED sequence), and then the method moves back to step 102.

The drain sensor discussed above is advantageous for a number of reasons. For example, the drain sensor 30 does not use any moving parts and therefore is not subjected to mechanical wear. Additionally, because the sensor does not have any dependency on fluid conductivity, the fluid detected by the drain sensor 30 may include other constituents besides water, such as orange juice, coffee, dust, dirt, food juices, etc. Further, the drain sensor 30 can operate even when the liquid freezes (e.g., it can detect ice) and can be configured such that it does not include exposed conductors or the like that may corrode. This is in contrast to commercially available condensate drain sensors, which have an operating limit of 0°C (32°F) or above and/or have exposed conductors.

The cage design eliminates false alarms due to the sensor being covered and protected by the cage portion 82. Also, the drain sensor 30 along with its control logic may preferably have the ability to predict clogged drains based on rate of fill and rate of decay of the historical data, and can categorize alarms as having different levels of urgency (e.g., High, Medium, Low) based on rate of fill, rate of decay height of fluid sensed and use of historical data.

## Claims

1. A refrigerated display case (10), which has a drain (32) and a system for detecting a substance in the drain comprising:
a drain sensor (30) which is arranged relative to the drain to detect the level of fluid, moisture or solid substance at the drain, and which comprises:
a support member (80) for placement relative to a drain, the support member including a cage (82),
a sensing element (50) attached to the support member and arranged within the cage, and
measurement circuitry (52) operatively coupled to the sensing element, in which the measurement circuitry is operative to provide an inductance measurement of the sensing element, the inductance of the sensing element being proportional to a level of fluid, moisture or a solid substance relative to the sensing element, and the system further comprising a controller (34) communicatively coupled to the drain sensor (30) to receive data corresponding to an inductance measurement provided by the sensor, in which the controller is configured to detect the fluid, moisture or solid substance level in the drain based on the inductance measurement provided by the sensor.

2. The display case according to claim 1, in which the controller (34) is configured:
to generate an alarm when the measured fluid level exceeds a prescribed level, and/or
to provide an indication of the presence of fluid, and/or
to provide an indication of a rate of fluid rise in the drain (32).

3. The display case according to claim 1 or claim 2, in which the controller (34) is configured to determine the substance level based on a mapping between inductance and substance level.

4. The display case according to claim 3, in which the mapping is configured such that increasing inductance corresponds to increasing substance level.

5. The display case according to any one of claims 1 to 4, in which the sensing element comprises an inductor (50) forming an impedance transformer of the surrounding fluid, moisture or solid substance, and the measurement circuitry (52) is configured to supply an oscillating current to the inductor and to calculate an inductance of the of the impedance transformer based on a resonant frequency of the impedance transformer.

6. The display case according to claim 5, in which the measurement circuitry (52) is configured to determine the level based on a predefined mapping between a plurality of different inductances of the sensing element (50) and a plurality of different levels of substance corresponding to the different inductances.

7. The display case according to any one of claims 1 to 6, which includes at least one of a wired communication device and a wireless communication device (44), which is communicatively coupled to the sensing element (50) and operative to communicate inductance measurements to a device remote from the drain sensor (30).

8. The display case according to any one of claims 1 to 7, in which the inductance of the sensing element (50) corresponds to a level of substance present in the cage (82).

9. The display case according to any one of claims 1 to 8, in which the sensing element comprises a two-dimensional coil (60).

10. The display case according to any one of claims 1 to 8, in which the sensing element comprises a three-dimensional coil (70).

11. A method for determining a fluid, moisture or solid substance level in a drain in a refrigerated display case using a drain sensor that includes a support member for placement relative to a drain, the support member including a cage, a sensing element attached to the support member and arranged within the cage, and measurement circuitry operatively coupled to the sensing element, wherein the measurement circuitry is operative to provide an inductance measurement of the sensing element, the inductance of the sensing element being proportional to a level of fluid, moisture or a solid substance relative to the sensing element, and a controller communicatively coupled to the drain sensor to receive data corresponding to an inductance measurement provided by the sensor, wherein the controller is configured to detect the fluid, moisture or solid substance level in the drain based on the inductance measurement provided by the sensor, the method comprising:
placing the drain sensor in a drain of a refrigerated display case, the drain sensor being arranged relative to the drain to detect fluid, moisture or solid substance level at the drain,
mapping the fluid, moisture or solid substance level to inductance of the sensor so that increasing inductance corresponds to an increase in the fluid, moisture or solid substance level,
measuring an inductance of the sensor, and
determining the fluid, moisture or solid substance level based on the measured inductance and the mapping between fluid, moisture or solid substance level and inductance.

12. The method according to claim 11, which includes determining the fluid, moisture or solid substance level when a temperature in the drain is less than 0°C (32°F).

## Patentansprüche

1. Eine Kühlvitrine (10) mit einem Ablauf (32) und einem System zum Detektieren einer Substanz in dem Ablauf umfassend:
ein Ablaufsensor (30), der relativ zum Ablauf angeordnet ist, um das Flüssigkeits-, Feuchtigkeits- oder Feststoffniveau im Ablauf zu detektieren, und der umfasst:
ein Stützelement (80) zum Anordnen relativ zu einem Ablauf, wobei das Stützelement einen Käfig (82) umfasst,
ein Messelement (50), das am Stützelement angebracht und innerhalb des Käfigs angeordnet ist, und
eine Messschaltung (52), die funktionsmäßig mit dem Messelement gekoppelt ist, wobei die Messschaltung dazu in der Lage ist, eine Induktivitätsmessung des Messelements bereitzustellen, wobei die Induktivität des Messelements proportional zu einem Flüssigkeits-, Feuchtigkeits- oder Feststoffniveau relativ zu dem Messelement ist, und
wobei das System ferner
eine Steuerung (34) umfasst, die kommunizierend mit dem Ablaufsensor (30) verbunden ist, um einer Induktivitätsmessung entsprechende und vom Sensor bereitgestellte Daten zu empfangen, wobei die Steuerung dazu eingerichtet ist, ausgehend von der Induktivitätsmessung des Sensors das Flüssigkeits-, Feuchtigkeits- oder Feststoffniveau im Ablauf zu detektieren.

2. Die Vitrine gemäß Anspruch 1, wobei die Steuerung (34) dazu eingerichtet ist, um:
einen Alarm zu erzeugen, wenn das gemessene Flüssigkeitsniveau ein vorgeschriebenes Niveau überschreitet, und/ oder
einen Hinweis für das Vorhandensein von Flüssigkeit bereitzustellen, und/ oder
einen Hinweis für eine Flüssigkeitsanstiegsrate im Ablauf (32) bereitzustellen.

3. Die Vitrine gemäß Anspruch 1 oder Anspruch 2, wobei die Steuerung (34) dazu eingerichtet ist, ein Substanzniveau, ausgehend von einer Zuordnung zwischen Induktivität und Substanzniveau, zu bestimmen.

4. Die Vitrine gemäß Anspruch 3, wobei die Zuordnung derart eingerichtet ist, dass steigende Induktivität steigendem Substanzniveau entspricht.

5. Die Vitrine gemäß einem der Ansprüche 1 bis 4, wobei das Messelement eine Induktorspule (50) umfasst, die einen Impedanzwandler der/ des umgebenden Flüssigkeit, Feuchtigkeit oder Feststoffs bildet, und die Messschaltung (52) dazu eingerichtet ist, der Induktorspule einen Wechselstrom zuzuführen und eine von einer Eigenfrequenz des Impedanzwandlers ausgehende Induktivität des Impedanzwandlers zu berechnen.

6. Die Vitrine gemäß Anspruch 5, wobei die Messschaltung (52) dazu eingerichtet ist, um das von einer vordefinierten Zuordnung zwischen einer Vielzahl verschiedener Induktivitäten des Messelements (50) und einer Vielzahl verschiedener Substanzniveaus, die den verschiedenen Induktivitäten entsprechen, ausgehende Niveau zu bestimmen.

7. Die Vitrine gemäß einem der Ansprüche 1 bis 6, die zumindest eine drahtgebundene Kommunikationsvorrichtung und eine drahtlose Kommunikationsvorrichtung (44) umfasst, die kommunizierend mit dem Messelement (50) verbunden und dazu in der Lage ist, Induktivitätsmessungen an eine vom Ablaufsensor (30) entfernte Vorrichtung zu kommunizieren.

8. Die Vitrine gemäß einem der Ansprüche 1 bis 7, wobei die Induktivität des Messelements (50) einem im Käfig (82) vorhandenen Substanzniveau entspricht.

9. Die Vitrine gemäß einem der Ansprüche 1 bis 8, wobei das Messelement eine zweidimensionale Spule (60) umfasst.

10. Die Vitrine gemäß einem der Ansprüche 1 bis 8, wobei das Messelement eine dreidimensionale Spule (70) umfasst.

11. Ein Verfahren zum Bestimmen eines Flüssigkeits-, Feuchtigkeits- oder Feststoffniveaus in einem Ablauf in einer Kühlvitrine unter Verwendung eines Ablaufsensors, der ein Stützelement zum Anordnen relativ zu einem Ablauf umfasst, wobei das Stützelement einen Käfig, ein Messelement, das am Stützelement angebracht und innerhalb des Käfigs angeordnet ist, und eine Messschaltung, die funktionsmäßig mit dem Messelement gekoppelt ist, wobei die Messschaltung dazu in der Lage ist, eine Induktivitätsmessung des Messelements bereitzustellen, wobei die Induktivität des Messelements proportional zu einem Flüssigkeits-, Feuchtigkeits- oder Feststoffniveau relativ zum Messelement ist, und eine Steuerung umfasst, die kommunikativ mit dem Ablaufsensor gekoppelt ist, um einer Induktivitätsmessung entsprechende und vom Sensor bereitgestellte Daten zu empfangen, wobei die Steuerung dazu eingerichtet ist, ausgehend von der Induktivitätsmessung des Sensors das Flüssigkeits-, Feuchtigkeits- oder Feststoffniveau im Ablauf zu detektieren, wobei das Verfahren umfasst:
Anordnen des Ablaufsensors in einem Ablauf der Kühlvitrine, wobei der Ablaufsensor relativ zum Ablauf angeordnet ist, um ein Flüssigkeits-, Feuchtigkeits- oder Feststoffniveau im Ablauf zu detektieren,
Zuordnen des Flüssigkeits-, Feuchtigkeits- oder Feststoffniveaus zur Induktivität des Sensors, sodass steigende Induktivität einer Steigerung des Flüssigkeits-, Feuchtigkeits- oder Feststoffniveaus entspricht,
Messen einer Induktivität des Sensors, und
Bestimmen des Flüssigkeits-, Feuchtigkeits- oder Feststoffniveaus ausgehend von der gemessenen Induktivität und der Zuordnung zwischen Flüssigkeits-, Feuchtigkeits- oder Feststoffniveau und Induktivität.

12. Das Verfahren gemäß Anspruch 11, das das Bestimmen des Flüssigkeits-, Feuchtigkeits- oder Feststoffniveaus umfasst, wenn die Temperatur im Ablauf kleiner als 0°C (32°F) ist.

## Revendications

1. Présentoir frigorifique (10), qui a un dispositif d'évacuation (32) et un système pour détecter une substance dans le dispositif d'évacuation comprenant :
un capteur (30) de dispositif d'évacuation qui est agencé par rapport au dispositif d'évacuation pour détecter le niveau de fluide, d'humidité ou d'une substance solide au niveau du dispositif d'évacuation, et qui comprend :
un organe de support (80) destiné à être placé par rapport à un dispositif d'évacuation, l'organe de support comportant une cage (82),
un élément de détection (50) fixé à l'organe de support et agencé à l'intérieur de la cage, et
des circuits de mesure (52) couplés de manière fonctionnelle à l'élément de détection, où les circuits de mesure fonctionnent pour fournir une mesure d'inductance de l'élément de détection, l'inductance de l'élément de détection étant proportionnelle à un niveau de fluide, d'humidité ou d'une substance solide par rapport à l'élément de détection, et
le système comprenant en outre
une unité de commande (34) couplée en communication au capteur (30) de dispositif d'évacuation pour recevoir des données correspondant à une mesure d'inductance fournie par le capteur, où l'unité de commande est configurée pour détecter le niveau de fluide, d'humidité ou de substance solide dans le dispositif d'évacuation sur la base de la mesure d'inductance fournie par le capteur.

2. Présentoir selon la revendication 1, dans lequel l'unité de commande (34) est configurée :
pour générer une alarme lorsque le niveau de fluide mesuré dépasse un niveau prescrit, et/ou
pour fournir une indication de la présence de fluide, et/ou
pour fournir une indication d'une vitesse de montée de fluide dans le dispositif d'évacuation (32).

3. Présentoir selon la revendication 1 ou 2, dans lequel l'unité de commande (34) est configurée pour déterminer le niveau de substance sur la base d'une mise en correspondance entre l'inductance et le niveau de substance.

4. Présentoir selon la revendication 3, dans lequel la mise en correspondance est configurée de sorte que l'augmentation de l'inductance corresponde à l'augmentation du niveau de substance.

5. Présentoir selon l'une quelconque des revendications 1 à 4, dans lequel l'élément de détection comprend une bobine d'induction (50) formant un transformateur d'impédance du fluide, de l'humidité ou de la substance solide environnant(e), et les circuits de mesure (52) sont configurés pour fournir un courant oscillatoire à la bobine d'induction et pour calculer une inductance du transformateur d'impédance sur la base d'une fréquence de résonance du transformateur d'impédance.

6. Présentoir selon la revendication 5, dans lequel les circuits de mesure (52) sont configurés pour déterminer le niveau sur la base d'une mise en correspondance prédéfinie entre une pluralité d'inductances différentes de l'élément de détection (50) et une pluralité de niveaux de substance différents correspondant aux différentes inductances.

7. Présentoir selon l'une quelconque des revendications 1 à 6, qui comporte au moins l'un d'un dispositif de communication câblé et d'un dispositif de communication sans fil (44), qui est couplé en communication à l'élément de détection (50) et fonctionne pour communiquer des mesures d'inductance à un dispositif distant du capteur (30) de dispositif d'évacuation.

8. Présentoir selon l'une quelconque des revendications 1 à 7, dans lequel l'inductance de l'élément de détection (50) correspond à un niveau de la substance présente dans la cage (82).

9. Présentoir selon l'une quelconque des revendications 1 à 8, dans lequel l'élément de détection comprend une bobine bidimensionnelle (60).

10. Présentoir selon l'une quelconque des revendications 1 à 8, dans lequel l'élément de détection comprend une bobine tridimensionnelle (70).

11. Procédé de détermination d'un niveau de fluide, d'humidité ou de substance solide dans un dispositif d'évacuation dans un présentoir frigorifique en utilisant un capteur de dispositif d'évacuation qui comporte un organe de support destiné à être placé par rapport à un dispositif d'évacuation, l'organe de support comportant une cage, un élément de détection fixé à l'organe de support et agencé à l'intérieur de la cage, et des circuits de mesure couplés de manière fonctionnelle à l'élément de détection, où les circuits de mesure fonctionnent pour fournir une mesure d'inductance de l'élément de détection, l'inductance de l'élément de détection étant proportionnelle à un niveau de fluide, d'humidité ou d'une substance solide par rapport à l'élément de détection, et une unité de commande couplée en communication au capteur de dispositif d'évacuation pour recevoir des données correspondant à une mesure d'inductance fournie par le capteur, où l'unité de commande est configurée pour détecter le niveau de fluide, d'humidité ou de substance solide dans le dispositif d'évacuation sur la base de la mesure d'inductance fournie par le capteur, le procédé comprenant le fait :
de placer le capteur de dispositif d'évacuation dans un dispositif d'évacuation d'un présentoir frigorifique, le capteur de dispositif d'évacuation étant agencé par rapport au dispositif d'évacuation pour détecter un niveau de fluide, d'humidité ou de substance solide au niveau du dispositif d'évacuation,
de mettre en correspondance le niveau de fluide, d'humidité ou de substance solide avec l'inductance du capteur de sorte que l'augmentation de l'inductance corresponde à une augmentation du niveau de fluide, d'humidité ou de substance solide,
de mesurer une inductance du capteur, et
de déterminer le niveau de fluide, d'humidité ou de substance solide sur la base de l'inductance mesurée et de la mise en correspondance entre le niveau de fluide, d'humidité ou de substance solide et l'inductance.

12. Procédé selon la revendication 11, qui comporte la détermination du niveau de fluide, d'humidité ou de substance solide lorsqu'une température dans le dispositif d'évacuation est inférieure à 0°C (32°F).
